**Europäisches Patentamt**

**European Patent Office**

**Office européen des brevets**

(19)

(11) **EP 1 376 431 A1**

(12) **EUROPÄISCHE PATENTANMELDUNG**

(43) Veröffentlichungstag:
02.01.2004 Patentblatt 2004/01

(51) Int Cl.⁷: **G06F 17/60**

(21) Anmeldenummer: 03012646.0

(22) Anmeldetag: **04.06.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **25.06.2002 DE 10228362**
**27.07.2002 DE 10234380**

(71) Anmelder: **Volkswagen Aktiengesellschaft**
**38436 Wolfsburg (DE)**

(72) Erfinder:
• **Brockmann, Gerhard**
**38518 Gifhorn (DE)**
• **Siekmann, Rolf-Wilhelm, Dr.**
**38518 Gifhorn (DE)**
• **Freitag, Ernst-Ulrich**
**38102 Braunschweig (DE)**
• **Frenzel, Michael**
**38448 Wolfsburg (DE)**
• **Sieverling, Hans**
**38444 Wolfsburg (DE)**
• **Zeh, Matthias**
**39646 Oebisfelder (DE)**

(54) **Verfahren und Vorrichtung zur Steuerung einer Auftragsabwicklung**

(57)    Verfahren und Vorrichtung für eine Steuerung einer Auftragsabwicklung eines Produktes umfassend mindestens eine Bestellphase (BPh), wobei ein Auftrag eines Kunden und/oder Händlers mittels einer Eingabeeinheit (EE) aufgenommen wird und ein Datensatz eines akzeptierten Auftrags in einer Datenbank, der Auftragsleiste (AL), ablegt wird und jedem abgelegten Datensatz eine eindeutige, unveränderbare Kennung und ein Fertigungszeitraum zugeordnet wird, eine Planungsphase (PPh), wobei Datensätze der Auftragsleiste (AL) mittels mindestens eines Rechenmittels (PL) abfragbar und auswertbar sind, zu Beginn der Planungsphase allen Aufträgen eines Fertigungszeitraums ein Fertigungswerk und eine Fertigungswoche zugewiesen werden, und am Ende der Planungsphase jedem Auftrag ein Fertigstellungstag zugewiesen wird, einen Fertigungsvorlauf (FVPh), wobei mittels mindestens eines Rechenmittels (FV) mindestens die Aufträge der Auftragsleiste (AL) für eine Fertigung aufbereitet werden, die Fertigung (FPh) und ein Störungsmanagement, wobei mittels mindestens eines Rechenmittels (StM) Störungen im Fertigungsvorlauf und/oder in der Fertigung festgestellt und/oder signalisiert werden, welche Aufträge betreffen, die noch vor der Fertigung stehen.

FIG. 4

EP 1 376 431 A1

**Beschreibung**

Die Erfindung bezieht sich auf ein Verfahren und eine Vorrichtung zur Steuerung einer Auftragsabwicklung, insbesondere für eine Auftragsabwicklung variantenreicher, individuell bestellter Produkte, wie zum Beispiel Kraftfahrzeuge.

Aus der deutschen Patentschrift DE 199 02 056 C1 ist ein Verfahren zur Festlegung einer Auftragsreihenfolge für Fertigungsanlagen, insbesondere für Fahrzeuge bekannt. Danach wird jedem Einzelauftrag, also jedem zu fertigenden Fahrzeug, zunächst ein Satz von Merkmalen zugeordnet, der die Anforderungen dieses Einzelauftrages an die bereitzustellenden Fertigungskapazitäten beschreibt. Solche Merkmale sind zum Beispiel das Modell, Farbe und Motorisierung des Fahrzeuges sowie Zusatzausstattungen wie Schiebedach oder Klimaanlage. Diezugehörigen Fertigungskapazitäten sind zum Beispiel eine geeignete Farbstraße in der Lackiererei, ein geeignetes Montageband sowie Montageteams für die Zusatzausstattungen. Bei der Zusammensetzung der Auftragsreihenfolge aus einer Sequenz von Einzelaufträgen entsteht für jedes Merkmal eine Merkmalsreihenfolge, die einen direkten Einfluß auf die Auslastung der für dieses Merkmal benötigten Fertigungskapazitäten und -ressourcen hat. Tritt das Merkmal in einer Reihenfolge an manchen Stellen gehäuft auf, so kann dies zu Überlastungen der zugehörigen Fertigungskapazitäten führen. Tritt anderseits das Merkmal sehr selten auf, so sind zugehörige Fertigungskapazitäten nicht ausgelastet. Beide Fälle verursachen Zusatzkosten, weswegen sie bei der Optimierung der Auftragsreihenfolge vermieden werden sollten. Um die mit einem gehäuften Auftreten eines Merkmals in einer Auftragsreihenfolge verbundenen Kosten quantitativ fassen zu können, ist es zweckmäßig, zunächst für jedes Merkmal eine Einzelbewertungsfunktion zu berechnen, die einen Gütefaktor der jeweiligen Auftragssequenz bezüglich dieses Merkmals darstellt. Die Einzelbewertungsfunktionen werden dann zu einer Gesamtbewertungsfunktion für die Gesamtheit aller Merkmale zusammengeführt. Diese Gesamtbewertungsfunktion, Modellmixgüte genannt, wird zweckmäßigerweise durch eine gewichtete Kombination der Einzelbewertungsfunktionen gebildet, wobei die relativen Gewichte der Einzelfunktionen die relative Kostenrelevanz der Einzelmerkmale abbilden. Die relativen Kosteneinflüsse unterschiedlicher Merkmale werden somit in die Modellierung des Gesamtsystems einbezogen.

Auftragsabwicklungen von Produkten, welche in einer hohe Variantenanzahl angeboten werden, teilweise in weit verteilten Fertigungsstandorten hergestellt werden und eine globale Verflechtung der Material-Lieferströme verlangen, weisen eine hohe Störanfälligkeit bei der Auftragsabwicklung auf. Ein derartiges hochvariantes Produkt ist beispielsweise ein Kraftfahrzeug. Es ist bekannt, auf Störungen lokal an dem jeweiligen Fertigungsstandort durch kurzfristige Maßnahmen derart zu reagieren, dass gestörte Einzelaufträge kaskadenartig zurückgestellt werden. Dies führt wiederum dazu, dass ungestörte Aufträge vorgezogen werden. Dabei wird die Planungssicherheit für eine Teileversorgung der Fertigung, insbesondere bei Just-In-Time-Fertigungen, gefährdet.

Der Erfindung liegt daher die technische Aufgabe zugrunde, ein Verfahren und eine Vorrichtung zu schaffen, durch welche alle ungestörten Einzelaufträge tagesgenau fertiggestellt werden und auftretende Störungsfälle einen möglichst geringen Einfluß auf Fertigstellungstermine davon unbetroffener Einzelaufträge haben.

Die Lösung der Aufgabe ergibt sich durch Gegenstände mit den Merkmalen der Ansprüche 1 und 8. Weitere vorteilhafte Ausgestaltungen der Erfindung ergeben sich aus den Unteransprüchen.

Die Auftragsabwicklung wird in Schritte der Arbeitsinhalte von fünf Phasen unterteilt: einer Bestellphase, einer Planungsphase, einem Fertigungsvorlauf, einer Fertigung und eines Störungsmanagement.

In der Bestellphase werden die Einzelaufträge mittels einer Eingabeeinheit aufgenommen. Dabei ist es sowohl denkbar, dass dies über einen Dialog zwischen dem Kunden und einer dezentralen Terminaleinrichtung geschieht (e-commerce) oder Einzelaufträge aus Händlersystemen übernommen werden. Mit der Aufnahme wird für jeden Einzelauftrag ein Datensatz elektronisch generiert, welcher zumindest die für die Produktion des Produktes benötigten Parameter des Produktes enthält. Zu diesen Parameter gehören bei einem Kraftfahrzeug beispielsweise der Motortyp, Farb- oder Lackierungswünsche, Ausstattung mit Klimaanlage usw. Die aufgenommenen Einzelaufträge werden automatisch auf ihre Richtigkeit überprüft werden, dies ist insbesondere bei Annahme von Einzelaufträgen über das Internet von Bedeutung, beispielsweise mit Hilfe eines sogenannten Konfigurators. Durch Eingabemasken, die auf der Anzeigeeinrichtung der dezentralen Terminaleinrichtung darstellbar sind, ist beispielsweise eine Programmführung realisierbar. Neben der Überprüfung auf Richtigkeit erfolgt automatisch eine Überprüfung der Durchführbarkeit der Einzelaufträge, d.h. eine Überprüfung der verfügbaren Fertigungskapazitäten über alle Fertigungsstandorte. Zu diesem Zweck werden dem Kunden und/ oder Händler an der denzentralen Terminaleinrichtung die notwendigen Informationen aus einer Datenbank in einer oder mehreren speziellen Ansichten elektronisch zur Verfügung gestellt. Daneben ist es auch denkbar, die Einzelaufträge an einer zentralen Verarbeitungseinrichtung zu sammeln und automatisch auszuwerten. Beide Verfahren haben jedoch gemeinsam, dass ein vorauseilender Kapazitätsabgleich für einen folgenden Fertigungszeitraum über alle Fertigungsstandorte gebildet wird. Das Ergebnis der Überprüfung führt zu einer Ablehnung oder einer Annahme des Einzelauftrags. Abgelehnte Einzelaufträge können mit dem Händler und/ oder Kunden überarbeitet werden, wobei eine Analyse der Ablehnungsgründe zur einfachen Lösungsfindung elektronisch verfügbar ist. Für jeden angenommen Einzelauftrag wird ein Datensatz generiert und dieser in einer Datenbank, der sogenannten Auftragsleiste, zusammen mit einer eindeutigen, unveränderbaren Kennung und dem Fertigungszeitraum automatisch abgelegt. Durch die Kennung ist der Einzelauftrag während der gesamten Auftragsabwicklung über alle Fertigungsstandorte eindeutig identifizierbar.

Liegen die Einzelaufträge eines Fertigungszeitraums vor, kann ein Übergang in die Planungsphase erfolgen. Die in der Auftragsleiste abgelegten Einzelaufträge sind dabei mittels geeigneter elektronischer Verarbeitungseinrichtungen in verschiedenen Ansichten für den jeweiligen Bearbeiter abfragbar und gegebenenfalls auch bearbeitbar. Zunächst erfolgt unter Verwendung geeigneter Analysemittel die Auswertung aller Datensätze eines Fertigungszeitraums mit Berücksichtigung sämtlicher möglicher Fertigungsstandorte. Dabei wird jedem Einzelauftrag eine Fertigungswoche und ein Fertigungsstandort automatisch zugewiesen. Der Begriff Fertigungswoche bezeichnet dabei nicht nur eine kalendarische Woche, sondern auch andere Zeiträume, die zwischen einem Fertigungszeitraum und einem Fertigstellungstag liegen können. Desweiteren versteht es sich, dass bei Vorhandensein nur eines Fertigungsstandortes die explizite Zuweisung eines Einzelauftrags zu diesem Fertigungsstandort entfallen kann. Durch den vorauseilenden Kapazitätsausgleich in der Bestellphase ist gewährleistet, dass Kapazitätsrestriktionen insgesamt nicht überschritten werden. Liegen die Fertigungsaufträge eines Fertigungsstandortes vor, so ist für diesen eine detaillierte automatische Planung möglich, durch welche ein Fertigstellungstag für die Einzelaufträge festgelegt werden kann. Anhand dieser Daten sind vor Ort weitere Termine wie beispielsweise Einlauf Montage, Einlauf Lack oder Start Rohbau für den aktuellen Planungszeitraum planbar. Die Einzelaufträge bleiben während der Planungsphase im Rahmen vorgegebener Restriktionsgrenzen durch den Kunden und/oder Händler veränderbar. Änderungswünsche werden anhand der verfügbaren Kapazitäten automatisch überprüft. So können Kundenwünsche spätest möglich noch berücksichtigt werden. Am Ende der Planungsphase ist der Fertigstellungstag verbindlich fixiert und es sind keine Änderungen des Auftrags mehr möglich. Bevorzugt werden alle Daten zu einem Einzelauftrag mit diesem auf der Auftragsleiste elektronisch abgelegt. Daneben ist es auch denkbar, die Daten eines Einzelauftrags in unterschiedlichen Datenbanken abzulegen, wobei die Daten immer mit der eindeutigen Kennung des Einzelauftrags automatisch versehen werden und dadurch schnell und eindeutig identifizierbar sind.

Liegen die Einzelaufträge mit verbindlichem Fertigstellungstag fest, so wird eine terminstabile Planung der Fertigung von geeigneten Verarbeitungseinrichtungen elektronisch durchgeführt. Schwerpunkte des Fertigungsvorlaufs liegen in einer operativen Sicherung der Teileversorgung, inkl. aller möglichen Belieferungsstrategien und einer Aufbereitung der Daten für eine Personalzuordnung. Die Daten der Einzelaufträge werden hierfür automatisch mindestens der Auftragsleiste entnommen.

Die Einzelaufträge der Auftragsleiste werden außerdem für die Fertigung elektronisch in einer Verarbeitungseinrichtung aufbereitet, und mittels mindestens teilweise automatisierter Fertigungs- und/oder Montagemittel fertiggestellt.

Störungen in der Auftragsabwicklung sind charakterisiert durch eine Nichtverfügbarkeit spezifischer Eigenschaften im Fertigungsfluß und/oder durch notwendige Nacharbeiten. Durch das Störungsmanagement werden anhand geeigneter Rechen- oder Beobachtungsmittel Störungen im Fertigungsvorlauf und/oder in der Fertigung automatisch festgestellt. Treten Störungen erst auf, wenn sich der Einzelauftrag bereits in der Fertigung befindet, so muß die Fertigungssteuerung geeignet reagieren. Befindet sich ein von der Störung betroffener Einzelauftrag noch vor der Fertigung, so greift automatisch das Störungsmanagement der Auftragsabwicklung. Der Einzelauftrag wird durch die elektronische Verarbeitungseinrichtung des Störungsmanagement aus der Auftragsleiste in eine Steuerleiste verschoben, wobei dabei dem Einzelauftrag ein neuer Fertigstellungstag oder bei längerfristigen Störungen eine neue Fertigungswoche automatisch zugewiesen wird. Solange es sich um Einzelstörungen handelt, hat das Sperren somit keinen relevanten Einfluß auf den Fertigungstermin anderer Einzelaufträge. Mittels der elektronischen Verarbeitungseinrichtung des Fertigungsvorlaufs kann auf die Steuerleiste zugegriffen werden, so dass die zurückgestellten Einzelaufträge in der Fertigungsplanung automatisch berücksichtigt werden.

In der Steuerleiste stehen die zurückgestellten Einzelaufträge separat unter Beobachtung. Ursachen der Störung sowie ergriffene Gegenmaßnahmen werden mit dem Einzelauftrag in dem Datensatz auf der Steuerleiste elektronisch abgelegt. Die neue Situation ist mit dem Kunden und/oder Händler verhandelbar. Dadurch, dass jeder Einzelauftrag eine eindeutige Kennung hat, ist eine hierfür notwendige Identifizierung und Zuordnung des Einzelauftrags möglich.

Es ist denkbar, dass mehrere Einzelaufträge von der Störungen betroffen sind, jedoch nur die Zurückstellung eines Einzelauftrags notwendig wird. Durch die eindeutige Kennung des Einzelauftrags und die Verwaltung sämtlicher relevanter Daten ist die Möglichkeit gegeben, die Einzelaufträge nach bestimmten Prioritäten zu wählen.

Bevorzugt greift die elektronische Verarbeitungseinrichtung für die Beurteilung der Durchführbarkeit in der Bestellphase auf die vorhandenen Datensätze der Steuer- und der Auftragsleiste zu. Für eine Durchführbarkeitsanalyse wird ein vorauseilender Kapazitätsausgleich in der Verarbeitungseinrichtung vorgenommen, wodurch die Auslastungsgrenzen aller Fertigungsstandorte bestimmt werden. Dabei werden eventuell aufgetretene Störungen, welche zum Sperren von Einzelaufträgen führten, sowie Auslastungsgrenzen aufgrund von Einzelaufträgen in der Steuerleiste berücksichtigt. Die Eigenschaftssummen aller eingeplanten Einzelaufträge müssen sich innerhalb dieser Auslastungsgrenzen bewegen.

Dadurch wird erzielt, dass ungestörte Einzelaufträge einen vorgegebenen Fertigstellungstermin tagesgenau - im Rahmen einer definierten Bandbreite - erreichen. Dabei lassen sich alle Bedarfe tagesgenau und am Verbrauchsort orientiert zur Sicherstellung aller Kapazitäten bereitstellen. Kapazitätsengpässe sind frühzeitig und automatisch erkennbar und können so schnell behoben werden.

In einer bevorzugten Ausführungsform können durch die mindestens eine elektronische Verarbeitungseinrichtung im Störungsmanagement Volumenstörungen automatisch festgestellt werden. Bei Volumenstörungen handelt es sich um Störungen, von denen eine Vielzahl von Einzelaufträgen betroffen ist. Bei auftretenden Volumenstörungen sind unter Verwendung der elektronischen Verarbeitungseinrichtung Datensätze aus der Auftragsleiste automatisch auswählbar und in eine Fülleiste taggenau verschiebbar, die Fülleiste wird für eine Aufbereitung der Datensätze im Fertigungsvorlauf und in der Fertigung automatisch berücksichtigt. Bei der Volumenstörung führt ein Verschieben der Einzelaufträge in die Steuerleiste unter Zuordnung eines neuen Fertigstellungstages zu einer erheblichen Reduzierung der Einzelaufträge, welche in den Fertigungsvorlauf gelangen. Dies kann dazu führen, dass definierte Logistikkonzepte der Teiledisposition, insbesondere der JIT-Aufträge, nicht mehr absicherbar sind. Um die Fertigstellungstermine der nicht von der Störung betroffenen Einzelaufträge zu gewährleisten, wird daher die Fülleiste automatisch und taggenau mit Einzelaufträgen aus der Auftragsleiste gefüllt. Daneben ist es jedoch auch denkbar, durch eine Absenkung der Fertigungszeit auf das reduzierte Fertigungsvolumen zu reduzieren.

In einer bevorzugten Ausführungsform wird die Fülleiste durch Datensätze aus der Auftragsleiste gefüllt, die sich noch in der Bestellphase befinden, die nicht kundenorientiert sind. Diese Aufträge sind noch nicht von anderen Planungsmitteln erfasst und es sind keine Änderungen des Einzelauftrags zu erwarten.

In einer weiteren Ausführungsform werden zugeführte Änderungswünsche zu Einzelaufträgen durch mindestens eine elektronische Verarbeitungseinrichtung ausgewertet, wobei die Änderungswünsche auf eine Durchführbarkeit automatisch überprüft werden. In der Bestellphase sind Änderungen wie ein Neuauftrag zu behandeln. Durch Eintritt der Planungsphase sind nicht mehr alle Eigenschaftsänderungen durchführbar. Auftragsänderungen sind daher nur zulässig, wenn die notwendigen Kapazitäten zum vorgesehenen Fertigungszeitpunkt zur Verfügung stehen. Für eine Bewertung der Änderungswünsche mit der elektronischen Verarbeitungseinrichtung sind alle für Änderungswünsche in Frage kommenden Eigenschaften mit einem Änderungsband versehen.

In einer bevorzugten Ausführungsform ist die Durchführbarkeit in der Planungsphase durch eine Trichterfunktion beschränkt. Die Breite des Änderungsbandes entspricht zu Beginn der Planungsphase der Breite während der Bestellphase, am Ende der Planungsphase, mit endgültiger Festlegung des Fertigstellungstages, sind keine Änderungen mehr möglich. Durch die Trichterfunktion ist ein guter Kompromiß zwischen Kundenwunsch und Durchführbarkeit gegeben.

In einer weiteren Ausführungsform sind den verschiedenen Parametern des Produktes unterschiedliche Trichterfunktionen zugeordnet. Dadurch kann eine noch größere Flexibilität erzielt werden. Änderungswünsche, welche beispielsweise schnell bestellbare Teile betreffen, können noch zu einem sehr späten Zeitpunkt eingestellt werden. Sind von der Änderungen jedoch mehrere Fertigungsabschnitte betroffen, so ist hier zugunsten der Planungssicherheit eine steilere Trichterfunktion zu wählen, d.h. derartige Änderungen können schon zu einem frühen Zeitpunkt nicht mehr akzeptiert werden.

Die Erfindung wird nachfolgend anhand eines bevorzugten Ausführungsbeispiels näher erläutert. Die Abbildungen zeigen:

Fig. 1      eine schematische Darstellung einer Vorrichtung für eine Unterstützung der Auftragsabwicklung,

Fig. 2      eine schematische Darstellung des Störungsmanagements bei Einzelstörungen,

Fig. 3      eine schematische Darstellung des Störungsmanagements bei Volumenstörungen und

Fig. 4      eine schematische Darstellung der Auftragsabwicklung im Zeitband.

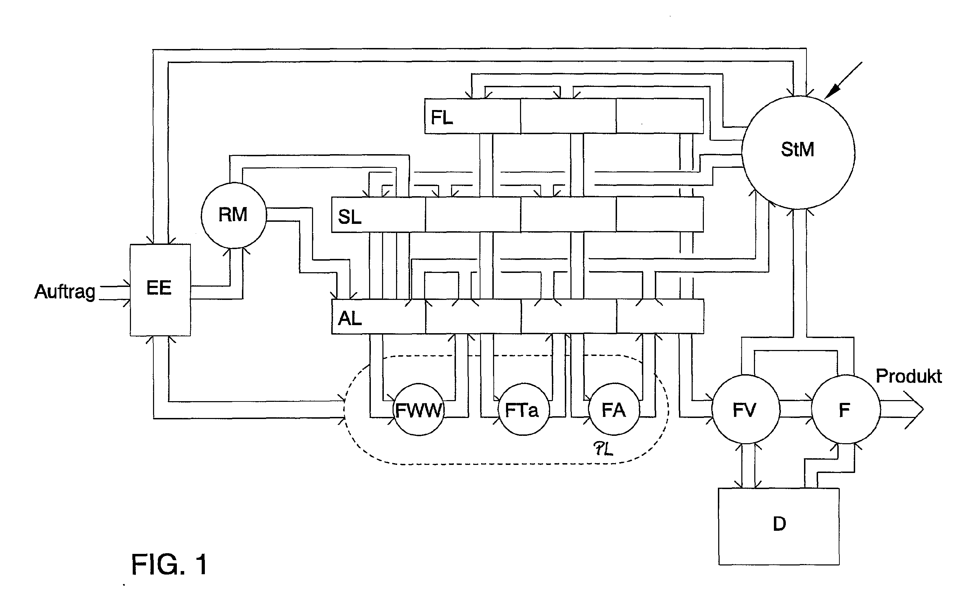

Fig. 1 zeigt schematisch eine erfindungsgemäße Vorrichtung für eine Unterstützung der Auftragsabwicklung an verteilten Fertigungsstandorten eines individuell bestellbaren Produktes, beispielsweise eines Kraftfahrzeugs. Die dargestellte Vorrichtung umfasst eine Auftragsleiste AL, in welcher ungestörte Einzelaufträge zur Fertigung eines Produktes elektronisch verwaltet werden, eine Steuerleiste SL, in welcher gestörte Einzelaufträge verwaltet werden, eine Fülleiste FL, in welcher Einzelaufträge beim Auftreten einer Volumenstörung elektronisch speicherbar sind, sowie eine Datenbank D, in welcher standortbezogene Informationen bzgl. Material, Personal etc. abgelegt sind. Außerdem umfasst die Vorrichtung eine Eingabeeinheit EE, eine elektronische Verarbeitungseinrichtung RM, eine elektronische Verarbeitungseinrichtung der Planung PL, eine elektronische Verarbeitungseinrichtung des Fertigungsvorlaufs FV, eine elektronische Verarbeitungseinrichtung des Störungsmanagements StM, sowie Fertigungsmittel F. Die Produktfertigung erfolgt aufgrund der Einzelaufträge gemäß den Daten der Auftragsleiste AL, der Steuerleiste SL und der Fülleiste FL. Das Maß, an welchem sich demnach alle Kapazitäten orientieren, ist der geplante Fertigstellungstermin.

Die dargestellten Blöcke bilden dabei symbolische Einheiten. Es ist sowohl denkbar, einzelne elektronische Verarbeitungseinrichtungen oder Speichereinheiten gemeinsam auszubilden, als auch Einheiten, beispielsweise die Auftragsleiste AL oder die elektronische Verarbeitungseinrichtungl PL, physisch zu unterteilen. Die verschiedenen Verarbeitungseinrichtungen des Auftragsabwicklungssystems können dabei unterschiedliche Betriebsysteme aufweisen, welche für die jeweilige Aufgabenstellung besonders geeignet sind. Da jedoch eine Vielzahl an Verarbeitungseinrichtungen auf die Auftrags- AL, die Steuer- SL und die Fülleiste FL zu greifen, ist eine Einheitlichkeit für dort abgelegten Datensätze gefordert. Die Art und Weise der Datenübertragung, insbesondere auch über verteilte Standorte, ist unter Berücksichtigung von Sicherheitsmaßnahmen geeignet zu wählen.

Bei einer störungsfreien Abwicklung werden die Einzelaufträge durch die Auftragsliste AL elektronisch verwaltet. Der Einzelauftrag wird von einer dezentralen Terminaleinrichtung EE an das System der Auftragsabwicklung gesendet und von diesem aufgenommen, mittels der elektronischen Verarbeitungseinrichtung RM wird die Durchführbarkeit des Einzelauftrages automatisch überprüft und bei positivem Prüfergebnis der Einzelauftrag in der Auftragsleiste AL unter Zuweisung eines Fertigungszeitraums elektronisch abgelegt. Für die Analyse der Durchführbarkeit eines neuen Einzelauftrags werden sowohl die Daten bereits eingegangener Einzelaufträge aus der Auftragsleiste AL als auch Daten über zurückgestellte Einzelaufträge aus der Steuerleiste SL herangezogen. Zudem stehen an der Verarbeitungseinrichtung RM Daten über die einzelnen Fertigungsstandorte, beispielsweise über Betriebsferien, sowie allgemeine Lieferprobleme u.ä. zu Verfügung. Anhand dieser Daten ist eine Durchführbarkeit des Einzelauftrags mit einem vorauseilenden Kapazitätenabgleich elektronisch bewertbar. Führt die Bewertung zu einer Ablehnung des Einzelauftrags, so kann eine Analyse der Ablehnungsgründe automatisch erfolgen und diese Analyse an den Kunden und/oder Händler übermittelt werden. Eventuell ist durch eine geringfügige Abwandlung des Einzelauftrags eine Durchführbarkeit möglich.

Liegen die Einzelaufträge eines Fertigungszeitraums vor, wird mittels der elektronischen Verarbeitungseinrichtung PL der Planung über eine Funktion FWW jedem Einzelauftrag eine Fertigungswoche und bei verteilten Standorten zusätzlich ein Fertigungswerk automatisch zugewiesen. Der Verarbeitungseinrichtung PL stehen unter anderem auch detaillierte Informationen über einzelne Fertigungswerke, beispielsweise deren Tageskapazitäten, und/oder Informationen über Beschaffungskapazitäten zur Verfügung.

Mit der Funktion FTa wird den Einzelaufträgen ein verbindlicher Fertigstellungstag zugewiesen. Die Zuweisung erfolgt automatisch für das jeweilige Fertigungswerk unter Verwendung einer geeigneten Verarbeitungseinrichtung und unter Berücksichtigung von Gleichverteilungs- und Blockbildungskriterien der hochvariantenreichen und individuell bestellten Produkte. Mit der verbindlichen Zuordnung des Fertigstellungstag erfolgt automatisch die Ermittlung aller weiteren Termine, die zur Erreichung des Fertigstellungstages eingehalten werden müssen. Dazu gehören beispielsweise die Termine für Einlauf Montage, Einlauf Lack oder Start Rohbau. Die Terminermittlung erfolgt über die volumenorientierte Durchlaufzeit. Die volumenorientierte Durchlaufzeit vDlz für einen Auftrag ergibt sich in Abhängigkeit der Gesamtzahl der Aufträge VA und der Anzahl pro Zeitabschnitt eingeschleuster Aufträge TV:

$$vDzl = \frac{VA}{TV}$$

Durch diese Terminermittlung ist der Fertigungsbeginn je Fertigungsabschnitt ermittelbar. Eigenschaftsbedingte Differenzen lassen sich über gewichtete Zuschläge beachten. Eine derartige Terminermittlung setzt jedoch voraus, dass die Auftragssteuerung gemäß einer vorgegebenen Sequenz erfolgt. Die Funktion FA fixiert den Einzelauftrag und damit auch die Auftragsreihenfolge, welche sequentiell abgearbeitet wird. Ab diesem Zeitpunkt sind für eine Gewährleistung der Planungssicherheit keine Auftragsänderungen mehr möglich.

Im dargestellten Fall erfolgt der Zugriff auf die Daten über die zentrale Verarbeitungseinrichtung PL. Diese Darstellung wurde zugunsten der Übersichtlichkeit gewählt. Bevorzugt sind an jedem Fertigungsstandort eigene Recheneinheiten vorhanden, welche eine Terminermittlung unterstützen.

Durch geeignete Sicherheitsmaßnahmen kann bei einer Ausführung mit einer zentralen Auftragsleiste AL sichergestellt werden, dass jedes Fertigungswerk nur zum Zugriff auf die ihm zugeteilten Einzelaufträge berechtigt ist. Daneben ist es auch denkbar, die Auftragsleiste AL aufzuteilen und die Informationen an jedem Fertigungsstandort abzuspeichern. Für eine zentrale Überwachung aller Einzelaufträge, sowie eine übergreifende Dokumentation aller mit dem Einzelauftrag zusammenhängenden Informationen ist jedoch eine zentrale Auftragsleiste AL zu bevorzugen.

Mit der Fixierung des Einzelauftrags FA wird ein bestimmtes Volumen an Einzelaufträgen aus der Auftragsleiste AL sowie aus der Steuerleiste SL und der Fülleiste FL an die zentrale Verarbeitungseinrichtung des Fertigungsvorlaufs FV übertragen. Um Kundenwünsche möglichst lange Berücksichtigen zu können, werden die Einzelaufträge zu einem möglichst späten Zeitpunkt in das System des Fertigungsvorlaufs eingestellt. Bevorzugt wird ein Tagesvolumen an die Verarbeitungseinrichtung des Fertigungsvorlaufs FV übertragen.

Die Aufgabenstellung im Fertigungsvorlauf umfaßt eine operative Sicherung der Teileversorgung, unter Berücksichtigung von Just-In-Time-Umfängen, eine Datenaufbereitung für die Fertigung sowie eine Informationsaufbereitung für eine Personalzuordnung. Auftragsinformationen sind der Auftrags- AL, der Steuer- SL und der Fülleiste FL zu entnehmen. Zusätzlich notwendige Informationen stehen beispielsweise aus einer Datenbank D zur Verfügung.

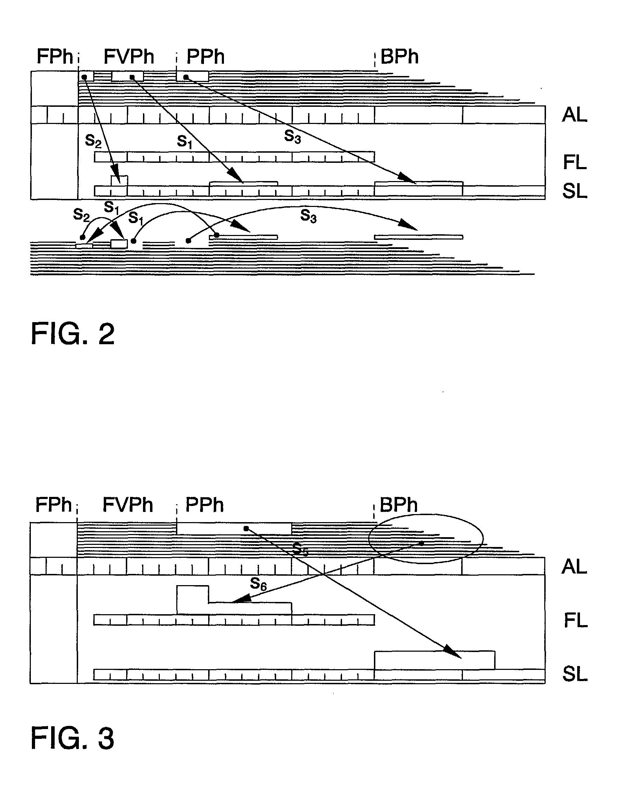

Die Bedeutung der Steuerleiste SL und der Fülleiste FL werden im folgenden erläutert. Durch die zentrale Verarbeitungseinrichtung des Störungsmanagements StM werden Fertigung und Fertigungsvorlauf sowie andere wichtige Vorgänge und Daten, beispielsweise über verfügbare Kapazitäten der Datenbank D, automatisch überwacht und Unregelmäßigkeiten frühzeitig erkannt. Soweit diese Störungen Einzelaufträge betreffen, welche sich bereits in der Fertigung befinden, greift ein nichtdargestelltes Fertigungsmanagement. Sind jedoch Einzelaufträge von der Störung betroffen, welche sich noch vor der Fertigung befinden, werden diese durch das Störungsmanagement der Auftragsabwicklung behandelt. Die betroffenen Aufträge werden mittels der elektronischen Verarbeitungseinrichtung StM automatisch der Auftragsleiste AL entnommen und auf der Steuerleiste SL abgelegt. Es erfolgt jedoch keine Veränderung in der Abarbeitungsreihenfolge der übrigen ungestörten Einzelaufträge. Dadurch kann für diese eine hohe Planungssicherheit gewährleistet werden. Termine, welche durch die volumenorientierte Durchlaufzeit ermittelt wurden, bleiben für die in der Auftragsleiste AL verbliebenen, ungestörten Einzelaufträge erhalten. Die auf die Steuerliste SL verschobenen Aufträge erhalten automatisch einen neuen Fertigungstermin. Als frühester Termin gilt dabei die Wiederverfügbarkeit der gestörten Eigenschaft. Die Einzelaufträge der Steuerleiste SL werden durch das Störungsmanagement verwaltet, welches anhand von Fig. 2 nachfolgend genauer erläutert ist.

Fig. 2 zeigt schematisch das Verfahren des Störungsmanagements. Die ungestörte Auftragsabwicklung ist in eine Bestellphase BPh, eine Planungsphase PPh, einen Fertigungsvorlauf FVPh und eine Fertigung FPh unterteilt. Von einer ersten Störung sind die Einzelaufträge S1 des Fertigungsvorlaufs FVPh betroffen. Sie werden der Auftragsleiste AL automatisch entnommen und in die Steuerleiste SL verschoben. Den Einzelaufträgen wird dabei ein neuer Fertigstellungstermin automatisch zugewiesen. Der früheste Fertigstellungstermin ist abhängig von dem Zeitpunkt, an welchem die Störung wieder behoben werden kann. Ursprünglich war eine Abarbeitung der Einzelaufträge S1 über zwei Zeitabschnitte geplant. Um durch eine Umterminierung der Einzelaufträge S1 die Fertigstellungstermine anderer Einzelaufträge nicht zu gefährden, erfolgt eine reduzierte Einstellung an Teilvolumina in die einzelnen Zeitabschnitte, so dass durch die Umterminierung nun eine Durchlaufzeit von vier Zeitabschnitten eingeplant wird. Eine zweite Störung betrifft die Einzelaufträge S2 kurz vor dem Übergang in die Fertigung FPh. Es handelt sich dabei um eine kurzfristige Störung. Das Störungsmanagement nutzt die beispielsweise durch die in Fig. 1 dargestellte Verarbeitungseinrichtung StM abfragbaren Informationen über den in der Auftragsleiste AL und der Steuerleiste SL dokumentierten Volumenstrom der Auftragsabwicklung. Durch die Verschiebung der Einzelaufträge S1 sind Fertigungskapazitäten freigeworden, in welche die Einzelaufträge S2 automatisch eingestellt werden können. Eine dritte Störung betrifft die Einzelaufträge S3. Es handelt sich dabei um langfristige Probleme, so dass die Einzelaufträge bis in die Bestellphase BPh zu verschieben sind. Liegen Einzelaufträge in der Steuerliste SL für die Bestellphase BPh vor, so sind diese bei der Überprüfung der Durchführbarkeit zukünftiger Einzelaufträge automatisch zu berücksichtigen.

Durch die Verschiebung von Einzelaufträgen in die Steuerleiste SL und die Umterminierung einzelner Einzelaufträge reduziert sich das Fertigungsvolumen einzelner Tage. Im Gegensatz zu bekannten Verfahren wird das Fertigungsvolumen nicht durch andere Einzelaufträge der Auftragsleiste AL aufgefüllt. Es wird lediglich nach der Abarbeitung des verringerten Tagesvolumens mit der Fertigung des folgenden Tages begonnen. Dieser Fertigungsvorgriff ist so gering, dass er ohne Einfluß auf JIT-Fertigungen und/oder Teiledispositionen bleibt. Er wird solange aufrecht gehalten, bis die zurückgestellten Einzelaufträge aus der Steuerleiste SL zur Fertigung anstehen. Durch die Abarbeitung der zusätzlichen Einzelaufträge wird das Tagesvolumen erhöht und somit der Vorgriff abgebaut. Erlaubt ist lediglich ein Vorgriff von Einzelaufträgen S4 aus der Steuerleiste SL, wobei dieser nur möglich ist, wenn alle Kapazitätsrestriktionen eingehalten werden.

Sind jedoch eine Vielzahl von Einzelaufträgen von der Störung betroffen, so hat die Rückstellung der Einzelaufträge in die Steuerleiste eine starke Schwankung des Fertigungsvolumens einzelner Zeitabschnitte als Folge. Diesen Schwankungen kann beispielsweise durch eine hohe Flexibilität der Arbeitszeiten begegnet werden.

Bevorzugt ist jedoch eine Behandlung von Volumenstörungen durch Verwendung einer Fülleiste FL.

Fig. 3 zeigt eine Behandlung einer Störung unter Verwendung der Fülleiste FL. Aufgrund der Störung sind eine Vielzahl von Einzelaufträgen S5 aus der Planungsphase PPh zurückzustellen. Die Folge der Rückstellung ist eine deutliche Reduzierung des Volumenstroms. Um diese Störungen aufzufangen, werden Einzelaufträge S6 aus der Bestellphase BPh automatisch vorgezogen. Diese Einzelaufträge sind somit schon sehr frühzeitig nicht mehr durch Kundenwünsche veränderbar. Bevorzugt werden daher nicht kundenorientierte Einzelaufträge aus der Bestellphase BPh vorgezogen. Einzelaufträge der Auftragsleiste AL, welche teilweise in Abstimmung mit Händlern und/oder Kunden erarbeitet wurden, werden weiter termingerecht gefertigt. Hier zeigt sich, dass es von Vorteil ist, die Auftragsleiste AL zentral zu verwalten. Der Zugriff und/oder eine Verschiebung von Daten der Auftragsleiste AL in die Steuerleiste SL oder die Fülleiste FL ist somit immer eindeutig für alle Anwender des Auftragsabwicklungssystems.

Während der Planungsphase PPh können vom Kunden und/oder Händler Änderungswünsche eingehen. Die Änderungswünsche werden durch die in Fig. 1 dargestellte Eingabeeinheit EE aufgenommen und an den Fertigungsstandort für die Bearbeitung des Auftrags weitergeleitet. Die Berücksichtigung der Änderungswünsche ist nicht in allen Fällen möglich. So dürfen aufgrund der Änderungen nach der Festlegung der Fertigungswoche keine Wochenkapazitäten, nach der Festlegung des Fertigstellungstages keine Tageskapazitäten überschritten werden. Spätestens mit Festlegung des verbindlichen Fertigstellungstages sind keine Änderungen mehr möglich. Der Zeitpunkt für die Fixierung des Einzelauftrags ist daher mit möglichst kurzem Vorlauf vor der Fertigung zu wählen. Das Änderungsmanagement unter Berücksichtigung der Restriktionen wird nachfolgend genauer erläutert.

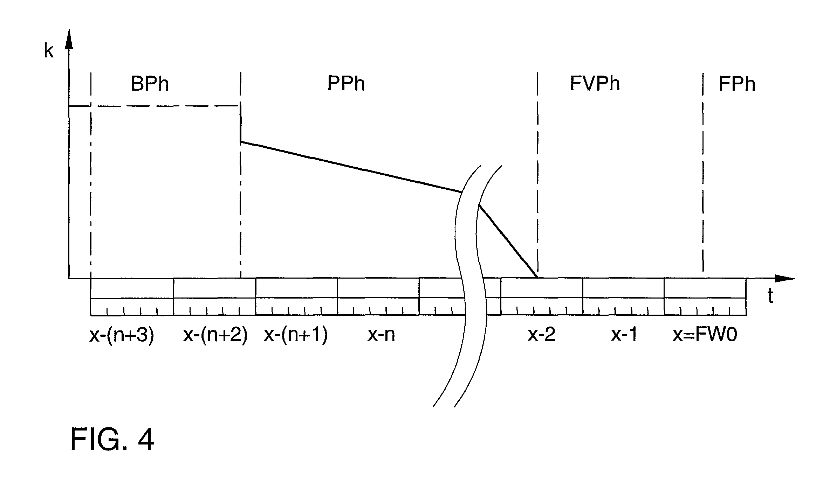

Fig. 4 zeigt schematisch die Aktivitäten einer ungestörten Auftragsabwicklung über einem Zeitband t, umfassend die Phasen: Bestellphase BPh, Planungsphase PPh, Phase der Fertigungsvorlaufs FVPh und Fertigungsphase FPh. Die dargestellte Länge der jeweiligen Phasen dient lediglich der Illustration. Eine Anpassung ist entsprechend des herzustellenden Produktes unter Berücksichtigung spezifischer Vorgaben und bekannter Verfahren durchzuführen. Während der Bestellphase BPh werden die Einzelaufträge für eine bestimmte Fertigungswoche FWo aufgenommen. Die Anzahl und/oder die konkrete Ausführungsform der annehmbaren Einzelaufträge ist dabei durch Bestell- und Fertigungskapazitäten K beschränkt, wobei während der Bestellphase BPh eine Kapazitätsabgleich über alle Fertigungswerke für die Fertigungswoche FWo durchgeführt wird. Auftragsänderungen in der Planungsphase PPh sind nur zulässig, wenn die notwendigen Kapazitäten K zum vorgesehenen Fertigungszeitpunkt bereitstellbar sind. Beispielsweise sind durch den Übergang in die Planungsphase PPh bei verteilten Fertigungsstandorten die Einzelaufträge verschiedenen Fertigungswerken zugeteilt. Änderungswünsche sind dann durch die Bestell- und Fertigungskapazitäten des jeweiligen Standortes beschränkt. Zur Sicherstellung der Kapazitäten K werden alle restriktiv veränderbaren Eigenschaften mit Ober- und Untergrenzen versehen. Zur Ermittlung der Ober- und Untergrenze, der sogenannten Bandbreite, sind die bekannten Logistikkonzepte von Teiledisposition und -transport auszuwerten. Die Bandbreite möglicher Änderungen nimmt mit Annäherung an den geplanten Fertigstellungstag ab. Zu Beginn der Planungsphase PPh ist jedem Einzelauftrag eine Fertigungswoche zugeteilt. Für Änderungswünsche sind dabei die Wochenkapazitäten zu betrachten. Nachdem der Fertigstellungstag festgelegt ist, sind Änderungen nur innerhalb der Tageskapazitäten akzeptierbar.

Die Vorrichtung und das Verfahren ermöglichen eine kontrollierbare und optimierbare Steuerung der Auftragsabwicklung vom Zeitpunkt der Auftragsabgabe bis zum Zeitpunkt der Fertigstellung des Produkts. Dabei sind die Einzelaufträge eines Fertigungszeitraums unter Berücksichtigung globaler Kapazitäten optimal über eine Vielzahl an Fertigungsstandorten verteilbar. Das Streben nach Einzeloptima zu Lasten angrenzender Fachbereiche wird sofort offenbar und kann unterbunden werden. Durch zentral ausführbare Datenbanken ist eine gute Überwachung der Auftragsabwicklung möglich. Jeder Einzelauftrag ist eindeutig gekennzeichnet und dadurch zu jedem Zeitpunkt identifizierbar. Eingriffe sind dadurch individuell und auftragsorientiert durchführbar. Die geplante Abarbeitungsreihenfolge der Einzelaufträge wird auch bei Störungen weitestgehend eingehalten.

**Patentansprüche**

1.  Verfahren für eine Steuerung einer Auftragsabwicklung eines Produktes umfassend mindestens die Schritte von Arbeitsinhalten

    -   einer Bestellphase (BPh), wobei

        ■   für jeden Einzelauftrag zur Herstellung eines Produktes ein Datensatz generiert wird, wobei der Datensatz zumindest die für eine Fertigung des Produktes benötigten Parameter des Produktes enthält

        ■   der Datensatz mittels mindestens einer elektronischen Verarbeitungseinrichtung (RM) ausgewertet wird, umfassend mindestens eine Überprüfung der Richtigkeit und der Durchführbarkeit des Einzelauftrages,

        ■   der Einzelauftrag aufgrund des Ergebnisses elektronisch akzeptiert oder abgelehnt wird,

        ■   der Datensatz eines akzeptierten Einzelauftrags in einer Datenbank einer Auftragsleiste (AL) ablegt wird und jedem abgelegten Datensatz eine eindeutige, unveränderbare Kennung und ein Fertigungszeitraum zugeordnet wird,

    -   eine Planungsphase (PPh), wobei

        ■   Datensätze der Auftragsleiste (AL) mittels mindestens einer elektronischen Verarbeitungseinrichtung (PL) abfragbar und auswertbar sind,

■ zu Beginn der Planungsphase den Einzelaufträgen eines Fertigungszeitraums zumindest eine Fertigungswoche zugewiesen werden,

■ während der Planungsphase ein Einzelauftrag veränderbar ist, wobei die Durchführbarkeit eines Änderungswunsches durch die mindestens eine elektronische Verarbeitungseinrichtung (PL) überprüfbar ist, und

■ den Einzelaufträgen ein Fertigstellungstag automatisch zugewiesen wird,

- eines Fertigungsvorlaufs (FVPh), wobei mittels mindestens einer elektronischen Verarbeitungseinrichtung (FV) mindestens die Einzelaufträge der Auftragsleiste (AL) für eine Fertigung aufbereitet werden,

- eines Störungsmanagements, wobei

■ mittels mindestens einer elektronischen Verarbeitungseinrichtung (StM) Störungen im Fertigungsvorlauf und/oder in der Fertigung der Einzelaufträge festgestellt und/oder signalisiert werden, welche Einzelaufträge betreffen, die noch vor der Fertigung stehen,

■ bei auftretenden Störungen mindestens der Datensatz des mindestens einen betroffenen Einzelauftrags aus der Auftragsleiste (AL) automatisch entnehmbar und auf einer Steuerleiste (SL) ablegbar ist, wobei mit dem Ablegen in der Steuerleiste (SL) dem Datensatz mindestens ein neuer Fertigstellungstermin automatisch zugewiesen wird, und

■ Einzelaufträge der Steuerleiste (SL) mindestens durch den Fertigungsvorlauf berücksichtigt werden.

2. Verfahren nach Anspruch 1, **dadurch gekennzeichnet, dass** durch die elektronische Verarbeitungseinrichtung (RM) für die Beurteilung der Durchführbarkeit eines Einzelauftrages mindestens auf die Datensätze der Steuerleiste (SL) und der Auftragsleiste (AL) zugegriffen wird.

3. Verfahren nach Anspruch 1 oder 2, **dadurch gekennzeichnet, dass** durch die mindestens eine elektronische Verarbeitungseinrichtung (StM) Einzel- und Volumenstörungen festgestellt werden, wobei bei auftretenden Volumenstörungen unter Verwendung der elektronischen Verarbeitungseinrichtung (StM) Datensätze aus der Auftragsleiste (AL) auswählbar und in eine Fülleiste (FL) insbesondere taggenau verschiebbar sind, wobei die Fülleiste (FL) für eine Aufbereitung der Datensätze zumindesat im Fertigungsvorlauf berücksichtigt wird.

4. Verfahren nach Anspruch 3, **dadurch gekennzeichnet, dass** bei einer Volumenstörung Datensätze von nach Kriterien definierten Einzelaufträgen aus der Auftragsleiste (AL) ausgewählt werden, die sich noch in der Bestellphase (BPh) befinden.

5. Verfahren nach einem der vorangegangenen Ansprüche, **dadurch gekennzeichnet, dass** Daten von Änderungswünschen zu Einzelaufträgen, die in der Bestell- (BPh) und/oder der Planungsphase (PPh)zugeführt werden, durch mindestens eine elektronische Verarbeitungseinrichtung (RM, PL) ausgewertet werden, wobei die Änderungswünsche auf eine Durchführbarkeit überprüft werden.

6. Verfahren nach Anspruch 5, **dadurch gekennzeichnet, dass** die Durchführbarkeit eines Änderungswunsches eines Einzelauftrages durch mindestens eine Trichterfunktion beschränkt ist.

7. Verfahren nach Anspruch 8, **dadurch gekennzeichnet, dass** den verschiedenen Parametern des Produktes unterschiedliche Trichterfunktionen zugeordnet sind.

8. Vorrichtung zur Durchführung eines Verfahrens zur Auftragsabwicklung nach Anspruch 1, umfassend mindestens

- eine erste Datenbank, die Auftragsleiste (AL), wobei Daten der Auftragsleiste (AL) durch mindestens ein Mittel in der Bestellphase (RM), der Planungsphase (PL), dem Fertigungsvorlauf (FV), der Fertigung (F) und dem Störungsmanagement (StM) jeweils in speziellen Ansichten automatisch zur Verfügung stellbar sind,

- eine zweite Datenbank, die Steuerleiste (SL), wobei Daten der Steuerleiste (SL) durch mindestens ein Mittel in der Bestellphase (BP), der Planungsphase (PL), dem Fertigungsvorlauf (FV), der Fertigung (F) und dem Störungsmanagement (StM) jeweils in speziellen Ansichten automatisch zur Verfügung stellbar sind,

- eine Eingabeeinheit (EE), durch welche ein Einzelauftrag aufnehmbar und ein Datensatz für die Einzelaufträge generierbar ist,

- mindestens eine elektronische Verarbeitungseinrichtung (RM), durch die der Datensatz mindestens eines Einzelauftrags in der Auftragsleiste (AL) ablegbar ist, wobei den Datensätzen beim Ablegen eine eindeutige, unveränderbare Kennung zugeordnet wird,

- mindestens eine elektronische Verarbeitungseinrichtung (PL), durch die die Daten der Auftragsleiste (AL) abfragbar und manipulierbar sind, wobei zu Beginn der Planungsphase (PPh) jedem Datensatz zumindest eine Fertigungswoche zuweisbar ist und am Ende der Planungsphase jedem Datensatz ein Fertigstellungtag zuweisbar ist, und

- mindestens einer elektronischen Verarbeitungseinrichtung (StM), durch die der Fertigungsvorlauf (FV) und die Fertigung (F) der Produkte überwachbar sind, und durch die bei auftretenden Störungen der Datensatz mindestens eines Einzelauftrags aus der Auftragsleiste (AL) entnehmbar und auf der Steuerleiste (SL) ablegbar ist.

9. Vorrichtung nach Anspruch 8, **dadurch gekennzeichnet, dass** durch die elektronische Verarbeitungseinrichtung (RM) für die Beurteilung der Durchführbarkeit von Einzelaufträgen mindestens auf die Datensätze der Steuerleiste (SL) und der Auftragsleiste (AL) zugegriffen wird.

10. Vorrichtung nach Anspruch 8 oder 9, **dadurch gekennzeichnet, dass** durch die mindestens eine elektronische Verarbeitungseinrichtung (StM) Einzel- und Volumenstörungen feststellbar sind, wobei bei auftretenden Volumenstörungen unter Verwendung de elektronischen Verarbeitungseinrichtung (StM) Datensätze aus der Auftragsleiste (AL) auswählbar und in eine Fülleiste (FL) taggenau verschiebbar sind, wobei die Fülleiste (FL) für eine Aufbereitung der Datensätze im Fertigungsvorlauf berücksichtigt wird.

11. Vorrichtung nach Anspruch 10, **dadurch gekennzeichnet, dass** bei einer Volumenstörung Datensätze von nach Kriterien definierten Aufträgen aus der Auftragsleiste (AL) auswählbar sind, die sich noch in der Bestellphase (BPh) befinden.

12. Vorrichtung nach einem der Ansprüche 8 bis 11, **dadurch gekennzeichnet, dass** Änderungswünsche von Einzelaufträgen, die in der Bestell- (BPh) und/oder der Planungsphase (PPh) durch die Eingabeeinheit (EE) eingegeben werden, durch mindestens eine elektronische Verarbeitungseinrichtung (RM, PL) auswertbar sind, wobei die Änderungswünsche auf eine Durchführbarkeit überprüfbar sind.

13. Vorrichtung nach Anspruch 12, **dadurch gekennzeichnet, dass** in der Planungsphase (PPh) die Durchführbarkeit eines Änderungswunsches eines Einzelauftrages durch eine Trichterfunktion beschränkbar ist.

14. Vorrichtung nach Anspruch 13, **dadurch gekennzeichnet, dass** den verschiedenen Parametern des Produktes unterschiedliche Trichterfunktionen zuordenbar sind.

15. Computerprogramm mit Programmcode-Mitteln, um alle Schritte des Verfahrens von jedem beliebigen der Ansprüche 1 bis 7 durchzuführen, wenn das Programm auf einem Computer ausgeführt wird.

16. Computerprogrammprodukt mit den Programmcode-Mitteln, die auf einem computerlesbaren Datenträger gespeichert sind, um das Verfahren nach jedem beliebigen der Ansprüche 1 bis 7 durchzuführen, wenn das Programmprodukt auf einem Computer ausgeführt wird,

FIG. 1

**FIG. 2**

**FIG. 3**

FIG. 4

EP 1 376 431 A1

| Europäisches Patentamt | **ERKLÄRUNG** die nach Regel 45 des Europäischen Patent-übereinkommens für das weitere Verfahren als europäischer Recherchenbericht gilt | Nummer der Anmeldung **EP 03 01 2646** |

| Die Recherchenabteilung ist der Auffassung, daß die vorliegende Patentanmeldung den Vorschriften des EPÜ in einem solchen Umfang nicht entspricht, daß sinnvolle Ermittlungen über den Stand der Technik auf der Grundlage aller Patentansprüche nicht möglich sind.<br><br>Grund: | **KLASSIFIKATION DER ANMELDUNG   (Int.Cl.7)**<br><br>G06F17/60 |
|---|---|

Die Ansprüche beziehen sich auf einen Sachverhalt, der nach Art. 52(2) und (3) EPÜ von der Patentierbarkeit ausgeschlossen ist; es handelt sich um Pläne und Verfahren für gedankliche und geschäftliche Tätigkeiten (Art. 52(2)c) EPC), nämlich ein Verfahren und eine Vorrichtung für die Autragsabwicklung eines Produktes. In Anbetracht dessen, dass der beanspruchte Gegenstand entweder nur derartige nichttechnische Sachverhalte oder allgemein bekannte Merkmale zu deren technologischen Umsetzung anführt, konnte der Rechercheprüfer keine technische Aufgabe feststellen, deren Lösung eventuell eine erfinderische Tätigkeit beinhalten würde; dies bezieht sich auf Merkmale wie z.B. Datenbanken und elektronische Verarbeitungseinrichtungen. Es war daher nicht möglich, sinnvolle Ermittlungen über den Stand der Technik durchzuführen (Regel 45 EPÜ und EPÜ Richtlinien Teil B Kapitel VIII, 1-6).

Der Anmelder wird darauf hingewiesen, daß im Zuge der Prüfung eine Recherche durchgeführt werden kann, sollten die einer Erklärung gemäß Regel 45 EPÜ zugrundeliegenden Mängel behoben worden sein (Vgl. EPA-Richtlinien C-VI, 8.5).

---

-----

| Recherchenort | Abschlußdatum | Prüfer |
|---|---|---|
| MÜNCHEN | 21. Juli 2003 | Glaser, N |

EPO FORM 1504 (P04C39)